# EUROPÄISCHE PATENTSCHRIFT

(11) **EP 1 113 566 B1**
(45) Veröffentlichungstag und Bekanntmachung des Hinweises auf die Patenterteilung: **29.08.2007**
(21) Anmeldenummer: 00127870.4
(22) Anmeldetag: 20.12.2000
(51) Int. Cl.: H02K 5/22

(54) **Anschlusskontakt für Kommutatormotor**
Terminal for commutator motor
Borne pour moteur à collecteur

(30) Priorität: 30.12.1999 DE 19963756
(43) Veröffentlichungstag der Anmeldung: 04.07.2001
(73) Patentinhaber: ROBERT BOSCH GMBH, 70442 Stuttgart (DE)
(72) Erfinder: Huber, Martin, 77704 Oberkirch (DE); Bitzer, Harold, 77815 Buehl (DE)

(56) Entgegenhaltungen:
- WO-A-94/27045
- US-A- 5 619 084
- US-A- 5 939 812
- PATENT ABSTRACTS OF JAPAN Bd. 1998, Nr. 11, 30. September 1998 (1998-09-30) -& JP 10 174357 A (ASMO CO LTD), 26. Juni 1998 (1998-06-26)

## Beschreibung

### Stand der Technik

Die Erfindung geht aus von einer elektrischen Maschine mit einem metallischen Gehäuse und mit einer metallischen Gehäusestirnwand und mit nahe der Gehäusestirnwand im Gehäuse isoliert und beweglich wenigstens einer gegen wenigstens ein umlaufendes Element andrückbaren Bürste sowie mit wenigstens einer elektrischen Anschlußschiene, die aus der Gehäusestirnwand der elektrischen Maschine herausragt und der Stromversorgung der wenigstens einen Bürste dient, nach der Gattung des Anspruchs 1.

Durch die Druckschrift US 5,343,102 A ist eine als Miniaturmotor bezeichnete elektrische Maschine bekannt mit einem metallischen Gehäuse und mit einer aus Isolierstoff bestehenden Stirnwand, in der ein Lager einer Motorwelle angeordnet ist und in der zwei Blattfedern verankert sind, an deren freien federnden Enden je eine Bürste angeordnet ist, die gegen einen auf der Welle angeordneten Kommutator gedrückt werden. Zur Stromversorgung der beiden Bürsten dienen Anschlußschienen, die durch die elektrisch isolierende Stirnwand durchziehende Öffnungen gesteckt sind und außerhalb der Stirnwand zwei parallel zur Welle ausgerichtete Anschlußstecker bilden. Zum Zweck des elektrischen Verbindens einer der beiden Bürsten mit dem metallischen und daher elektrisch leitfähigen Gehäuse ist zwischen einer der Anschlußschienen und dem metallischen Gehäuse ein aus einem Blechstreifen im wesentlichen u-förmig gebogenes Kontaktelement eingebaut, dessen erster Schenkel im Kontakt mit einer der beiden Anschlußschienen in eine der genannten Öffnungen eingesteckt ist und dessen zweiter Schenkel zwischen einen Umfangsabschnitt der Stirnwand und eine Innenfläche des metallischen Gehäuses eingeklemmt ist. Damit ist das Potential des metallischen Gehäuses identisch mit dem Potential der der genannten Anschlußschiene zugeordneten Bürste. Die elektrische Kontaktierung des metallischen Gehäuses mit der elektrischen Anschlußschiene der genannten Bürste ist vorteilhaft bezüglich wengistens teilweiser Unterdrückung von Funkstörungen (radio frequency supression), die sonst als Folge von Kommutierungen und sogenanntem Bürstenfeuer Radioempfang oder Navigationsfunkempfang stören könnten. Als nachteilig kann angesehen werden, daß infolge der Ausbildung der Gehäusestirnwand als ein isolierendes Kunststoffteil dieses nicht als ein Störfrequenzen abschirmendes Bauteil ausgebildet ist.

Durch die Druckschrift WO 99/49215 ist eine als Motor betriebene elektrische Maschine bekannt mit einem metallischen Gehäuse, mit einer in ein offenes Ende des metallischen Gehäuses eingesetzten metallischen Gehäusestirnwand, mit einem in dem metallischen Gehäuse drehbaren Anker, dem ein Kommutator zugeordnet ist, mit nicht gezeichneten Bürsten, die gegen den Kommutator angedrückt werden und mit einer an der Innenseite der Gehäusestirnwand angeordneten isolierenden Platte, die zwei Sockel aufweist, in die zwei elektrische Anschlußelemente eingesetzt sind. Die Anschlußelemente weisen außerhalb der Sockel freie gabelartige Enden auf, die zur Aufnahme von Anschlußmitteln der Bürsten dienen und dabei als Quetschverbinder dienen. Innerhalb der Sockel sind die Anschlußelemente beispielsweise nach Art von Sicherungsfahnen ausgebildet. Offengelassen ist, in welcher Weise die beiden sichtbaren Anschlußelemente mit den nicht dargestellten Bürsten elektrisch verschaltet sind. Diese elektrische Maschine ist mit einer Radialkolbenpumpe einer Fahrzeugbremsanlage kombiniert. Hierbei liegen ein Pumpenblock der Radialkolbenpumpe und die Gehäusestirnwand und das Gehäuse der elektrischen Maschine aneinander an.

Durch die Druckschrift DE 196 42 133 A1 ist eine weitere elektrische Maschine in Form eines an ein Pumpengehäuse angeflanschten Motors bekannt. Diese elektrische Maschine hat ebenfalls ein elektrisch leitfähiges, weil magnetisch leitfähiges Gehäuse und eine Gehäusestirnwand, die aus Blech tiefgezogen ist. Ein zum Pumpengehäuse gerichtetes offenes Ende des Gehäuses weist innen eine als axialer Anschlag dienende Stufe auf, an der die in das offene Ende des Gehäuses eingepreßte Gehäusestirnwand zur Anlage gebracht ist. Desweiteren weist die elektrische Maschine einen Kommutator und wenigstens eine Bürste, einen Köcher zur beweglichen Aufnahme der Bürste und wenigstens eine elektrische Anschlußschiene auf. Hierbei können der wenigstens eine Köcher und diese elektrische Anschlußschiene getragen werden von einer innerhalb der elektrischen Maschine an die Gehäusestirnwand angelegten isolierenden Platte, die zur Fixierung der elektrischen Anschlußschiene ein als Dom bezeichnetes Isolierrohr aufweist, das parallel zu der elektrischen Maschine und damit quer zur isolierenden Platte ausgerichtet ist, durch einen Durchbruch in der Gehäusestirnwand hindurchragt und sich durch eine das Pumpengehäuse durchziehende Durchlaßöffnung erstreckt, so daß außerhalb des Pumpengehäuses und dabei auch außerhalb der elektrischen Maschine ein elektrischer Anschlußkontakt vorhanden ist zur Versorgung wenigstens einer der Bürsten. Die Stromversorgung dieser elektrischen Anschlußschiene über ihren Anschlußkontakt erfolgt beispielsweise mittels einer nicht dargestellten Stromversorgungseinrichtung, die an den Pumpenblock anflanschbar ist. Nicht dargestellt ist, wie der Dom innen und die elektrische Anschlußschiene innerhalb des Doms ausgebildet sind.

Durch die Druckschrift WO 94/27045 ist gemäß deren Figuren 10 und 11 eine elektrische Maschine bekannt mit einem als gespritzte Kunststoffkappe ausgebildeten Gehäuse und mit einer in dieses eingesetzten thermoplastischen Gehäusestirnwand, der ein Kommutator der elektrischen Maschine benachbart ist. Durch die Gehäusestirnwand hindurch erstreckt sich aus dem Innern der elektrischen Maschine und durch einen benachbarten Pumpenblock hindurch zu einen Steuer- und Regelelektronik eine elektrische Anschlußschiene, die in einen Steckkontakt ausläuft. Von der elektrisch isolierenden Gehäusestirnwand ausgehend ist diese elektrische Anschlußschiene bis zum Steckkontakt hin thermoplastisch umspritzt, so daß die Stirnwand und die Umspritzung ein einstückiges Bauteil bilden. Die Druckschrift zeigt auch Kontaktfedern, zwischen die der Steckkontakt der Anschlußschiene eintauchbar ist. Weil das Gehäuse aus Kunststoff gespritzt ist, fehlt ihm eine elektrische Leitfähigkeit.

Durch die Druckschrift EP 0 660 491 A1 ist eine Kombination einer elektrischen Maschine mit einer Pumpe bekannt, wobei die elektrische Maschine als ein Antriebsmotor für die Pumpe dient. Die Pumpe hat einen Pumpenblock, der als eine Stirnwand für ein Gehäuse der elektrischen Maschine dient. Die elektrische Maschine weist einen Kommutator auf und diesem zugeordnet zwei sogenannte Plusbürsten und zwei sogenannte Minusbürsten. Die Bürsten sind in Köchern geführt, die ihrerseits an einer Köcherhalteplatte aus Isolierstoff angeordnet sind. Die beiden Minusbürsten sind über Anschlußlitzen mit von der Köcherhalteplatte gehaltenen Stanzgittern kontaktiert und diese Stanzgitter sind mittels Schrauben gegen den Pumpenblock geschraubt. Dieserart sind die sogenannten Minusbürsten mit der Masse des Pumpengehäuses elektrisch leitend verbunden. Insoweit ist das Pumpengehäuse mit einem Minuspol einer Stromquelle zu verbinden. Weil das metallische Gehäuse der elektrischen Maschine mit dem Pumpenblock verschraubt ist, weisen der Pumpenblock, das Gehäuse der elektrischen Maschine und die Minusbürsten das gleiche Potential auf. Die Plusbürsten sind mit einem von der Köcherhalteplatte isoliert getragenen Anschlußstift elektrisch leitend verbunden, wobei dieser Anschlußstift parallel zur elektrischen Maschine ausgerichtet ist und sich durch eine Durchlaßöffnung im Pumpenblock erstreckt und aus diesem herausragt. Beispielsweise könnte man wenigstens eine Schraube, mittels der das Gehäuse an dem Pumpenblock befestigt ist, für einen Kontakt zwischen dem Pumpenblock und dem Gehäuse verwenden.

Durch die Druckschrift US 5,939,812 A ist eine die Gattung bildende elektrische Maschine bekannt mit einem Gehäuse, das elektrisch leitend aus Metall hergestellt ist, mit einer in eine stirnseitige Öffnung des Gehäuses eingepreßten Gehäusestirnwand, die elektrisch leitend aus Metall hergestellt ist, mit wenigstens einer dem Betrieb der elektrischen Maschine dienenden Bürste, die relativ zu dem Gehäuse innerhalb diesem beweglich und isoliert angeordnet ist und unter einer Einwirkung einer Feder steht, mit wenigstens einer der Stromversorgung der wenigstens einen Bürste dienenden elektrischen Anschlußschiene, die im wesentlichen parallel zu einer Längsachse der elektrischen Maschine ausgerichtet ist und sich durch eine aus Isolierstoff bestehende Platte, die benachbart zu der Gehäusestirnwand angeordnet ist, und einen zugeordneten Durchbruch in der Gehäusestirnwand erstreckt und aus der elektrischen Maschine herausragt und auf einem Teil ihrer Länge von dem Isolierstoff der Platte umfaßt ist. Hierbei ist die Platte mit wenigstens einem Köcher für die wenigstens eine Bürste, die eine Anschlußlitze aufweist, ausgestattet. Die die Bürste belastende Feder ist eine Schraubenfeder, die von einem aus Metallblech hergestellten Köcherdeckel unter Spannung gehalten wird. Zwecks Kontaktierung der wenigstens einen Bürste mit dem Gehäuse ist als metallisches Blech ein Federblech ausgewählt und einstückig ist an den Köcherdeckel eine Federzunge angeformt, die mit ihrem freien Ende als Kontakt innen gegen das Gehäuse drückt. Eine elektrische Verbindung zwischen der genannten Bürste und dem Gehäuse kommt also zustande unter der Voraussetzung, daß das Gehäuse innen metallisch blank ist. Die Bürste ihrerseits ist über die genannte Litze und eine Drosselspule mit einer elektrischen Anschlußschiene elektrisch verbunden. Diese elektrische Anschlußschiene ist parallel zur elektrischen Maschine ausgerichtet und erstreckt sich durch einen an der isolierenden Platte angeordneten Sockel und durch die isolierende Platte und hinein in ein von der Platte ausgehendes isolierendes Rohr. Zur verbesserten Kontaktgabe ist die Kontaktzunge an ihrem federnden und dabei am Gehäuse anliegenden Ende gespalten ausgebildet zu dem Zweck, daß anstelle von beispielsweise nur einem einzigen Kontaktpunkt nunmehr zwei Kontaktpunkte zur Kontaktierung der genannten Bürste mit dem Gehäuse zur Verfügung stehen. Eine solche Kontaktierung kommt jedoch dann nicht zustande, wenn fallweise aus optischen Gründen das Gehäuse wenigstens außen lackiert ist. Insbesondere wenn die Lackierung im Tauchverfahren erfolgt, ist nicht ausschließbar, daß der für die Kontaktzunge vorgesehene Bereich innerhalb des Gehäuses eine Lackschicht und damit eine Isolationsschicht aufweist. Zwar könnte man das Gehäuse vor dem Lackieren mittels eines Klebebandabschnitts gegen Lack schützen und den Klebebandschnitt nach der Trocknung des Lackes entfernen, jedoch sind hierfür Kosten verursachende Arbeitsvorgänge nötig. Desweiteren ist nicht mit letzter Sicherheit ausschließbar, daß beim Entfernen eines solchen Klebebandabschnittes Klebstoff als Rückstand im Gehäuse verbleibt und ggf. das Zustandekommen des gewünschten elektrischen Kontakts verhindert. Dies hätte zur Folge, daß eine gewollte Funkentstörung (radio distortion supression) nicht zustande käme.

### Vorteile der Erfindung

Die elektrische Maschine mit den kennzeichnenden Merkmalen des Anspruchs 1 hat den Vorteil, daß die elektrische Verbindung zwischen der elektrischen Anschlußschiene und dem Gehäuse durch eine zusätzliche Öffnung in der isolierenden Platte gegen die in das Gehäuse eingepreßte Gehäusestirnwand, die dadurch mit dem Gehäuse in einem elektrischen Kontakt geraten ist, erfolgt, wobei beispielsweise eine für die Kontaktierung an der elektrischen Anschlußschiene vorgesehene und zur Gehäusestirnwand hin gerichtete Begrenzungsfläche unmittelbaren oder mittelbaren Kontakt mit der Gehäusestirnwand haben kann.

Durch die in den abhängigen Ansprüchen aufgeführten Maßnahmen sind vorteilhafte Weiterbildungen und Verbesserungen der im Patentanspruch 1 angegebenen elektrischen Maschine möglich.

Die kennzeichnenden Merkmale des Anspruchs 2 ergeben den Vorteil einer bruchsicheren Verbindung des rohrartigen Stützkörpers mit der isolierenden Platte, wobei der nasenartige Ansatz als ein eine wegen Werkstoffanordnung entstandene Entfernung überbrückendes Mittel dient.

Die kennzeichnenden Merkmale des Anspruchs 3 ergeben den Vorteil, daß die elektrische Anschlußschiene in einer seither bekannten Art und Weise in zwei axialen Richtungen relativ zum rohrartigen Stützkörper axial fixierbar ist und daß dabei toleranzbedingte unterschiedliche Luftspalte zwischen der Begrenzungsfläche, die zur Kontaktierung bestimmt ist, und der gegen diese Begrenzungsfläche gerichteten Oberfläche der Gehäusestirnwand mittels eines elektrisch leitfähigen und dabei federelastisch deformierbaren Kontaktmittels überbrückt werden.

Die kennzeichnenden Merkmale des Anspruchs 4 ergeben den Vorteil, daß die Blattfeder relativ einfach vor der Vereinigung mit der Gehäusestirnwand in Montageausrichtung bringbar und dann dort gesichert ist.

Die kennzeichnenden Merkmale des Anspruchs 5 machen die Blattfedern verliersicher, so daß man die Blattfedern an der isolierenden Platte vormontieren kann und erst danach an eine Montagestation zu verbringen braucht, an der die isolierende Platte und die Gehäusestirnwand miteinander zusammen gebaut werden.

Die kennzeichnenden Merkmale des Anspruchs 7 ergeben den Vorteil, daß in preisgünstiger Weise die Kombination aus den beiden Blattfedern und den beiden Schenkeln dadurch herstellbar ist, daß ein Blechstreifen mit im wesentlichen der Länge einer Blattfeder und der Höhe eines Schenkels mit einem u-förmigen Stanzschnitt versehen wird und eine von den Stanzschnitt umgrenzte Zunge winkelig zu den beiden Blattfedern hochgebogen wird in einer Biegerichtung, die auch für den anderen Schenkel vorgesehen ist.

Die kennzeichnenden Merkmale des Anspruchs 8 ergeben den Vorteil, daß beim Gegeneinanderspannen der isolierenden Platte und der Gehäusestirnwand die Blattfeder keine Verquetschung erfährt und daß desweiteren die Scheitelkrümmung der Blattfeder nicht an einer Kontaktnahme mit der Begrenzungsfläche gestört wird von Werkstoff der isolierenden Platte.

### Zeichnung

Ein Ausführungsbeispiel der erfindungsgemäßen elektrischen Maschine ist nachfolgend anhand von Figuren näher beschrieben. Es zeigen
Figur 1 einen Längsschnitt durch eine in Serie hergestellte, ausgelieferte und im Verkehr befindliche elektrische Maschine, die bezüglich einer elektrischen Anschlußschiene den Ausgangspunkt für die erfindungsgemäße elektrische Maschine bildet,
Figur 2 eine isolierende Platte der erfindungsgemäßen elektrischen Maschine im Schnitt zusammen mit einer elektrischen Anschlußschiene,
Figur 3 eine relativ zur Figur 2 um 90 Grad gedrehte teilweise geschnittene Ansicht,
Figur 4 eine ebenfalls um 90 Grad relativ zur Ansicht der Figur 2, aber entgegengesetzt gedrehte Ansicht im Längsschnitt,
Figur 5 ein in der Figur 2 enthaltenes Bauteil in Einzeldarstellung,
Figur 6 eine weitere um 90 Grad relativ zur Ansicht gemäß der Figur 5 gedrehte Ansicht und
Figur 7 eine Draufsicht auf das Bauteil gemäß der Figur 5 sowie
Figur 8 eine Variante einer elektrischen Maschine unter Verwendung einer isolierenden Platte der erfindungsgemäßen elektrischen Maschine.

### Beschreibung des erfindungsgemäßen Ausführungsbeispiels ausgehend vom öffentlich vorbenutzten Stand der Technik

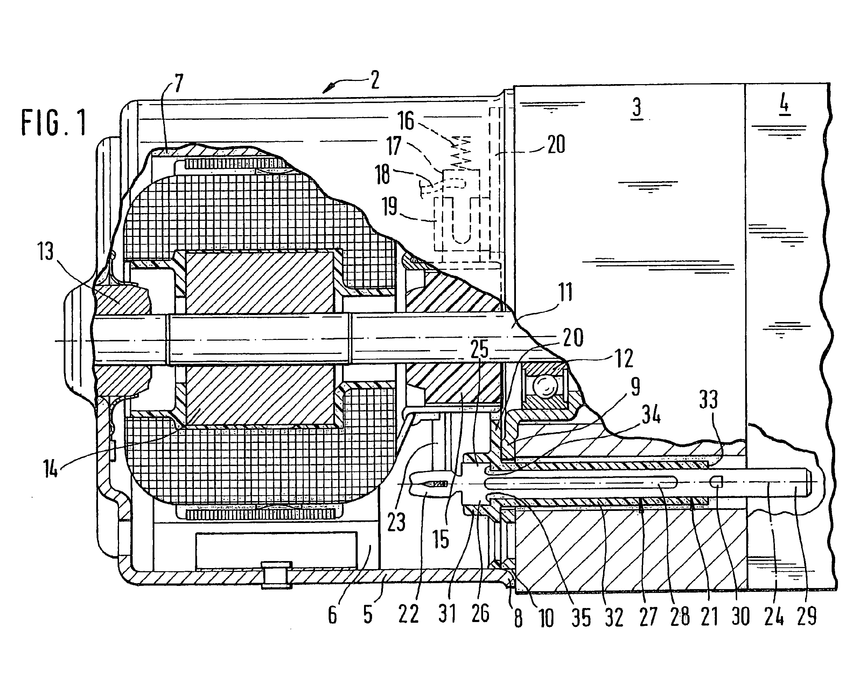

Die Figur 1 stellt im Längsschnitt eine öffentlich vorbenützte elektrische Maschine 2 dar, die als Bosch-ABS 5.3 bekannt ist und als ein Elektromotor zum Antreiben einer in einem Pumpenblock 3 untergebrachten, aber nicht dargestellten Radialkolbenpumpe dient und aus einem an den Pumpenblock 3 angesetzten Steuer- und Stromversorgungsgerät 4 zum Betrieb mit Strom versorgbar ist. Als Radialkolbenpumpe ist aus dem Stand der Technik beispielsweise eine auswählbar gemäß der Druckschrift US 5,939,812 A oder WO 99/49215.
Die elektrische Maschine 2 hat ein Gehäuse 5, in das wenigstens zwei Permanentmagnete 6, 7 eingebaut sind und das aus elektrisch leitendem Stahlblech tiefgezogen ist, eine in ein offenes Ende 8 vorzugsweise durch Einpressen eingebaute Gehäusestirnwand 9 mit einem Umfangsrand 10, eine Maschinenwelle 11, die mittels eines in der Gehäusestirnwand 9 angeordneten ersten Wellenlagers 12 und mittels im Gehäuse 5 eingebauten zweiten Wellenlagers 13 drehbar gelagert ist und einen Anker 15 und einen diesem zugeordneten Kommutator 15 trägt, und wenigstens eine mittels einer Feder 16 gegen den Kommutator 15 andrückbare Bürste 17, die eine Anschlußlitze 18 aufweist, und einen die Bürste 17 längsbeweglich aufnehmenden Köcher 19 und eine den Köcher 19 tragende isolierende Platte 20, die sich in Anlage an der Gehäusestirnwand 9 befindet, und zur Versorgung der wenigstens einen Bürste 17 mit elektrischem Strom aus dem Steuer- und Stromversorgungsgerät 4 wenigstens eine elektrische Anschlußschiene 21. Die elektrische Anschlußschiene 21 besitzt innerhalb des Gehäuses 5 ein gabelartiges Anschlußende 22 zur Herstellung einer elektrischen Verbindung per Quetschen mit einem elektrischen Leiter 23, angrenzend an das gabelartige Anschlußende 22 zwei von einer Konstruktionslängsachse 24 symmetrisch abstehende Sicherungsfahnen 25, 26, einen mittleren Abschnitt 27, der mittels einer Sicke 28 versteift ist, und ein freies Ende 29, das als ein Steckkontakt dient, und in einem Bereich zwischen diesem freien Ende 29 und der Sicke 28 eine Axialsicherungsnase 30. Die elektrische Anschlußschiene 21 ist aus Blech gestanzt. Zur Aufnahme der Sicherungsfahnen 25 und 26 ist an die isolierende Platte 20 ein Sockel 31 angespritzt. Damit die elektrische Anschlußschiene kippsicher gelagert ist, ist gegenüberliegend zu dem Sockel 31 an die isolierende Platte 20 ein rohrartiger Tragkörper 32 angespritzt, der sich bis hin zu der Axialsicherungsnase 30 erstreckt. In dargestellter Weise ist der rohrartige Tragkörper 32 derart ausgebildet, daß beim Hindurchschieben des freien Endes 29 von dem Sockel 31 her und auch beim Hindurchschieben der Axialsicherungsnase 30 der rohrartige Tragkörper 32 elastisch aufweitbar ist, so daß die Axialsicherungsnase 30 hindurchtreten kann, aber in Gegenrichtung stirnseitig an dem rohrartigen Tragkörper 32 einen zugeordneten Axialanschlag 33 findet. In der Figur 1 erkennbar bilden im Übergang von dem Sockel 31 in den rohrartigen Tragkörper 32 zwei Übergangsflächen 34 und 35 ebenfalls axiale Anschlagsflächen, so daß in dem in der Figur 1 dargestellten Montageszustand die elektrische Anschlußschiene 21 unverrückbar gesichert ist.

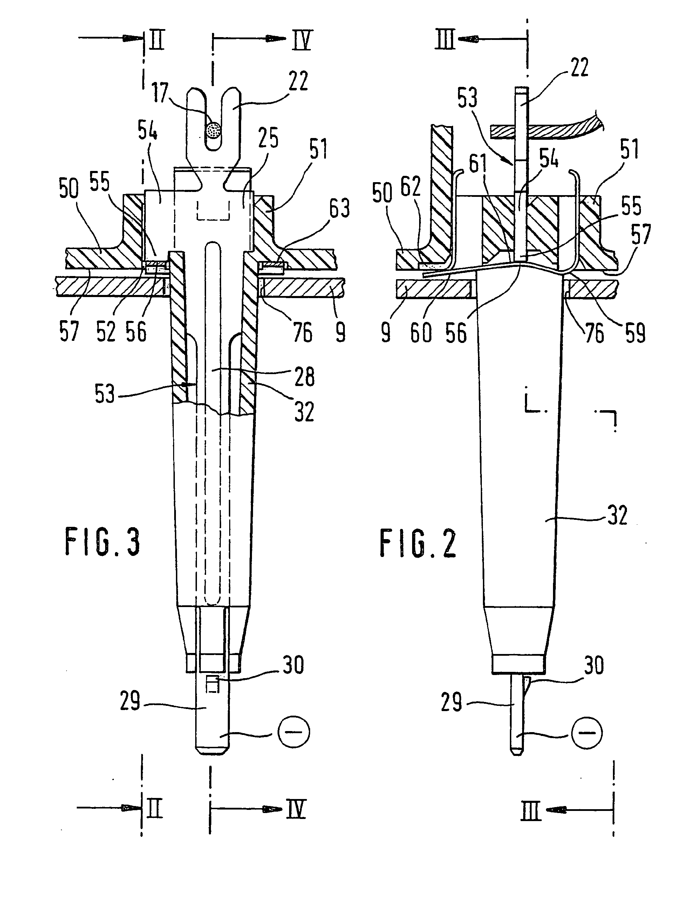

Wie ein solcher Sockel 31 und ein solcher rohrartiger Tragkörper 32 in einer um 90 Grad gedrehten Ansicht im Längsschnitt aussehen können, ist beispielsweise in der Druckschrift US 5,939,812 A in deren Figur 1 angedeutet. Für die der Erfindung zugrundeliegende Aufgabe wird gemäß den Figuren 2 bis 4 angrenzend an eine beispielsweise aus dem Stand der Technik entnehmbare Gehäusestirnwand 9 eine weitergebildete isolierende Platte 50 eingesetzt mit einem weitergebildeten Sockel 51, der angrenzend an einen rohrartigen Tragkörper 32, der beispielsweise dem Stand der Technik entnommen sein kann, einen zur Gehäusestirnseite 9 hin offenen Durchbruch 52 aufweist. Eine elektrische Anschlußschiene 53 weist an einem Ende ein gabelartiges Anschlußende 22 beispielsweise aus dem Stand der Technik auf und andernendig ein freies Ende 29, das einen Steckkontakt bildet,sowie eine Axialsicherungsnase 30, eine Sicke 28 und eine abgewandelte Sicherungsfahne 54, die außerhalb des rohrartigen Tragkörpers 32 einen zur Gehäusestirnwand 9 gerichteten nasenartigen Fortsatz 55 mit einer gegen die Gehäusestirnwand 9 gerichteten Begrenzungsfläche 56 hat. Die Begrenzungsfläche 56 bildet eine Kontaktfläche für die Aufgabe des elektrischen Verbindens des Gehäuses 5 einer elektrischen Maschine mit wenigstens einer von deren Bürsten.

Für den Durchtritt des rohrartigen Tragkörpers 32 durch die Gehäusestirnwand 9 anläßlich des Zusammenbauens der elektrischen Maschine weist die Gehäusestirnseite 9 eine Durchbruchsöffnung 76 auf.

Es besteht nun die Möglichkeit, den nasenartigen Fortsatz 55 in Richtung zur Gehäusestirnwand 9 länger auszubilden als dies in der Figur 3 dargestellt ist. Wenn hierbei darauf geachtet wird, daß der nasenartige Fortsatz 55 bis unter eine Auflagefläche 57 der isolierenden Platte 50 reicht, also über die Auflagefläche 57 hervorragt, so würde beim Gegeneinanderbewegen der isolierenden Platte 50 und der Gehäusestirnwand 9 die Begrenzungsfläche 56 auf der Gehäusestirnwand 9 auftreffen, so daß ein elektrischer Kontakt zwischen der Gehäusestirnwand 9 und der elektrischen Anschlußschiene 53 zustande kommt. Hierbei müßte die isolierende Platte 50 mit dem angespritzten rohrartigen Tragkörper 32 bezüglich der Länge dieses rohrartigen Tragkörpers 32 und auch die Entfernung zwischen der Axialsicherungsnase 30 und der Begrenzungsfläche 56 des nasenartigen Fortsatzes 55 sehr eng toleriert werden, so daß unter einer als zulässig angesehenen elastischen Verspannung der isolierenden Platte 50 relativ zur Gehäusestirnwand 9 der genannte elektrische Kontakt im Betrieb der elektrischen Maschine dauerhaft erhalten bleibt.

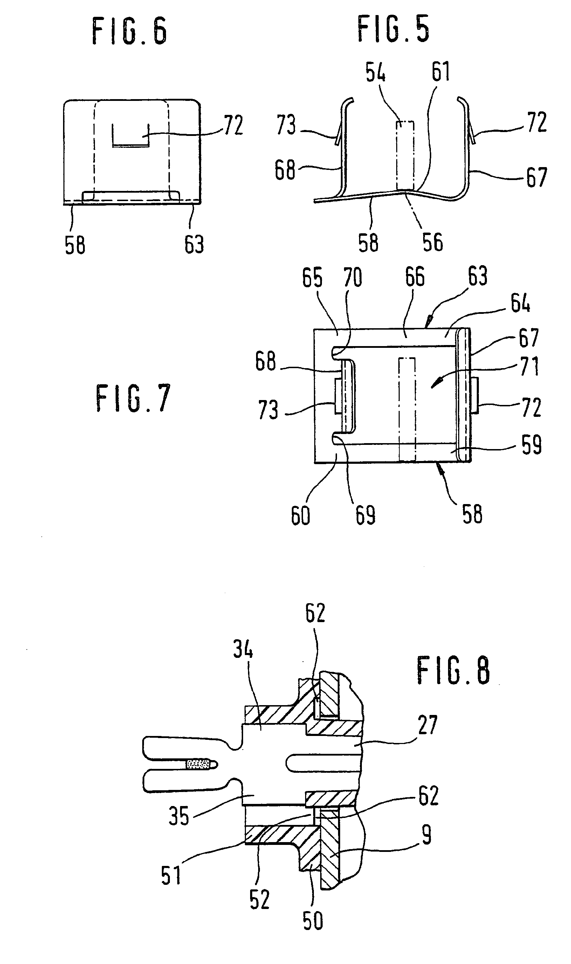

Weil wegen des Herstellens des rohrartigen Tragkörpers 32 als ein längliches Spritzformteil es zu nachteiligen Abmessungen und Ausschuß kommen kann, wird die Kontaktierung zwischen der Begrenzungsfläche 56 des nasenartigen Fortsatzes 55 und der Gehäusestirnwand 9 mittelbar durchgeführt unter Verwendung eines elastischen Kontaktelementes, das hier in Form einer in den Figuren 5 bis 7 besonders dargestellten Blattfeder 58 ausgebildet ist. Hierbei ist die Blattfeder 58 in einer Vergrößerung dargestellt, die auch mit in den Figuren 2 bis 4 vorhandenen Darstellungen übereinstimmt. Die starke Vergrößerung wurde gewählt, weil die Blattfeder 58 aus einem Federkontaktblech herstellbar ist, das beispielsweise nur 0,25 mm dick ist. Eine solche Dicke ist in einer Zeichnung gegenständlich nicht darstellbar. Ein solches Federkontaktblech kann beispielsweise aus Berylliumbronze hergestellt sein.

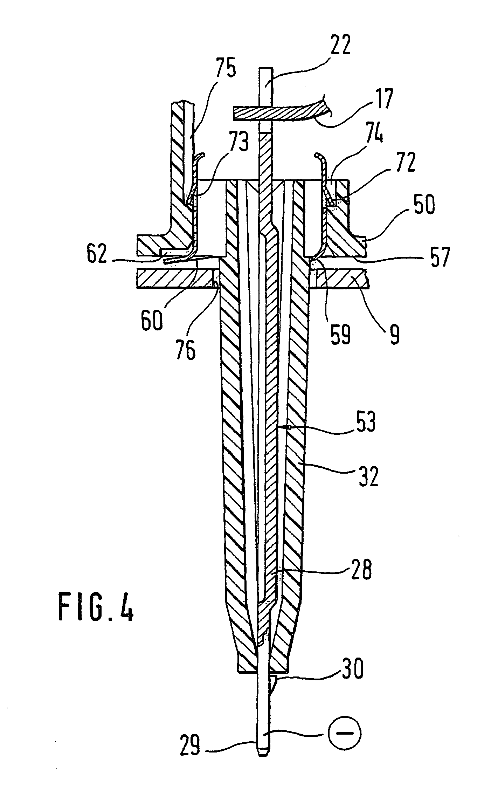

Zur sicheren Kontaktgabe ist die Blattfeder 58, so wie dies am besten in den Figuren 2 und 5 sichtbar ist, zwischen zwei Blattfederenden 59 und 60 gekrümmt ausgebildet und weist einen Krümmungsscheitel 61 auf. Zur Kontaktgabe ist der Krümmungsscheitel 61 gegen die Begrenzungsfläche 56 des nasenartigen Fortsatzes 55 gerichtet und die Blattfederenden 59 und 60 sind zur Anlage an der Gehäusestirnwand 9 bestimmt, so wie dies die Figur 2 andeutet. In den Figuren 2 bis 4 sind die Gehäusestirnwand 9 und die isolierende Platte 50 noch nicht aufeinanderliegend dargestellt; es ist ein Abstand zwischen ihnen dargestellt. Hierdurch ist beispielsweise in den Figuren 2 und 4 besonders gut ersichtlich, daß in der isolierenden Platte 50 von derjenigen Seite her, die zur Gehäusestirnwand 9 gerichtet ist, eine Vertiefung 62 angeordnet ist, in der die Blattfeder 58 bei aneinander anliegenden Flächen der isolierenden Platte 50 und der Gehäusestirnwand 9 Raum findet. Die Vertiefung 62 wird dabei mehrfach so tief ausgebildet sein als der Federblattwerkstoff der Blattfeder 58 dick ist. Hierdurch wird eine Verspannung im Sinne einer eine Kontaktgabe gefährdenden Flachdrückung der Blattfeder 58 vermieden.

Weil es technisch schwierig ist, eine Blattfeder 58, die nur die Form eines schmalen Streifens hätte, ausreichend sicher in Ausrichtung zum nasenartigen Fortsatz 55 und seiner Begrenzungsfläche 56 zu halten, ist in einem Abstand eine zweite Blattfeder 63 parallel angeordnet, wobei diese Blattfeder 63 elektrisch blind ist, Blattfederenden 64 und 65 aufweist und ebenfalls einen Krümmungsscheitel 66 aufweisen kann. Die Blattfederenden 59 und 64 sowie 60 und 65 werden auf Abstand gehalten mittels zweier Stege 67, 68, die einstückig mit den Blattfedern 58 und 63 hergestellt sind durch Ausstanzen aus dem Kontaktfederblech. Ausgehend von den Krümmungsscheitel 56 in der Figur 5 ist der Steg 67 nach links aufwärts und dabei im wesentlichen eine senkrechte Ausrichtung annehmend umgebogen. Links von dem Krümmungsscheitel 56 sind per Stanzschnitt entstandene u-förmige Nischen 69, 70 zu sehen, von denen ausgehend zunächst ein in der Ebene des Kontaktfederbleches befindlicher Blechstreifen im gleichen Biegesinn wie der Steg 27 nach links oben gebogen wird, um schließlich den Steg 68 mit seiner im wesentlichen senkrechten Ausrichtung in der Figur 5 zu bilden. Dadurch ist zwischen den Blattfedern 58 und 63 sowie den Schenkeln 67 und 68 eine Öffnung 71 vorhanden, durch die das in den Figuren 2 bis 4 sichtbare rohrartige Tragstück 32 steckbar ist, wobei diese Öffnung 71 so groß ist, daß eine Verklemmung mit den Blattfedern 58 und 63 vermieden wird. Damit wird die Elastizität der Blattfeder 58 für die Aufgabe des Kontaktierens beibehalten.

Es wurde erwähnt, daß die Stege 67 und 68 im wesentlichen senkrecht und dabei im wesentlichen rechtwinkelig zu der Blattfeder 78 ausgerichtete Schenkel bilden. Diese können mittels Reibschluß irgendwo am Sockel 51 bzw. der isolierenden Platte 50 fixiert sein, bevor und während die isolierende Platte 50 und die Gehäusestirnwand 9 gegeneinander bewegt und aneinander anliegend miteinander verbunden werden. Weil aber, wie dies die angegebene geringe Dicke der Blattfeder 58 schon vermuten läßt, nach deren Herstellung und beim Transport zu einer Montagestelle, die Blattfeder eine nachteilige Verbiegung erfahren könnte, ist aus Sicherheitsgründen zur Lagesicherung eine formschlüssige Lagesicherung vorgesehen in Form von elastischen Widerhaken 72 und 73 an den Schenkeln 67 und 68. Wie dies am besten in der Figur 6 ersichtlich ist, ist der Widerhaken 72 herstellbar durch Anbringung eines u-förmigen Stanzschnittes und Herausbiegen einer der dort umgrenzten Zunge aus Kontaktfederblech nach außen und also in der Figur 5 nach rechts. In gleichartiger Weise ist der Widerhaken 73 herstellbar. Am Sockel 50 sind den Widerhaken 72 und 73 Rastnischen 74 und 75 zugeordnet. Hierbei befinden sich dank der Ausrichtung der Widerhaken 72 und 73 nach auswärts die Rastnischen 74 und 75 außerhalb der beiden Schenkel 67 und 68.

Die Darstellung in den Figuren 2 bis 4, gemäß denen die Gehäusestirnwand 9 und die isolierende Platte 50 einen geringen Abstand voneinander haben, ist gewollt, damit man das der Kontaktierung dienende Bauteil, nämlich die Blattfeder 58 in Ausrichtung zu der Gehäusestirnwand 9 und der isolierenden Platte 50 mit ihrer der Funktionssicherheit der Kontaktierung dienenden Vertiefung 62 besser erkennbar ist.Der Fachmann kann sich leicht vorstellen, daß beim Zusammendrükken der isolierenden Platte 50 und der Gehäusestirnwand 9 die Biegung der Blattfeder 58 elastisch verkleinert wird, die Blattfeder 58 also flacher aussehen wird und der Krümmungsscheitel 61 einen gegenüber der gezeichneten Darstellung etwas vergrößerten Radius erhalten wird.

Wie die Ausführungsbeispielsbeschreibung zu der Blattfeder 58 angibt, dient diese einer verbesserten Kontaktgabe zwischen der elektrischen Anschlußschiene 53 und der Gehäusestirnwand 9, die elektrisch leitfähig ist und durch Einpressen in ein elektrisch leitendes Gehäuse 5 einer elektrischen Maschine mit diesem leitfähig kontaktiert wird. Diese Aufgabe der gesicherten Kontaktierung ist natürlich auch lösbar mittels anderer elektrisch leitender elastischer Bauteile als der dargestellten Blattfeder 58.

Die beschriebenen Kontaktierungen, eine solche ohne Zuhilfenahme der Blattfeder 58 und eine unter Zuhilfenahme der Blattfeder 58, sind anwendbar, unabhängig davon, ob das Gehäuse 5 außen und innen eine metallische Oberfläche aufweist oder aus optischen Gründen eine Lackierung erhalten hat, die beim Einpressen der Stirnwand 9 in das offene Ende 8 des Gehäuses 5 wenigstens teilweise zerstört wird und dieserart zum direkten metallischen Kontakt zwischen dem Gehäuse 5 und der Gehäusestirnwand 9 führt.

Eine elektrische Maschine mit dem gemäß den Figuren 2 bis 4 ausgebildeten Sockel 50 muß nicht immer eine elektrische Verbindung zwischen einer der wenigstens einen Büste 17 und dem Gehäuse 9 haben. Wenn aufgrund von Gegebenheiten auf eine Funkentstörung oder Funkstörminderung verzichtet werden kann, so kann man in den in den Figuren 2 bis 4 dargestellten Sockel 51 auch die dem durch öffentliche Benutzung bekannten Stand der Technik entnehmbare elektrische Anschlußschiene, so wie sie als Anschlußschiene 21 in der Figur 1 beschrieben ist, einsetzen. In der Figur 8 ist erkennbar, daß dann eine Sicherungsfahne 34 und eine Sicherungsfahne 35 axial im Sockel 51 anliegen und daß die Sicherungsfahne 35, die zur Ausnehmung 52 gerichtet ist, in einem Mindestabstand von der Gehäusestirnwand 9 endet und somit keinen elektrischen Kontakt zu dieser aufweist. Die Figur 8 macht somit erkennbar, daß unter Verwendung von ein- und derselben isolierenden Platte 50 mit dem besonders gestalteten Sockel 51 sowohl elektrische Maschinen mit Gehäusepotential am Potential der elektrischen Anschlußschiene 53 als auch ohne Angleichung des Potentials des Gehäuses 5 an das Potential der Anschlußschiene 27 möglich sind. Es bedarf also nur des Austausches einer elektrischen Anschlußschiene gegen eine anders ausgebildete elektrische Anschlußschiene. Und dies kann beispielsweise durch Auswahl der unterschiedlichen elektrischen Anschlußschienen unmittelbar an einer Montagestation erfolgen, so daß es in wirtschaftlicher Weise möglich ist, elektrische Maschinen herzustellen, deren Gehäuse nicht oder doch mit wenigstens einer elektrischen Anschlußschiene elektrisch leitend verbunden sind.

## Patentansprüche

1. Elektrische Maschine mit einem Gehäuse (5), das elektrisch leitend aus Metall hergestellt ist, mit einer Gehäusestirnwand (9), die elektrisch leitend aus Metall hergestellt ist, mit wenigstens einer dem Betrieb der elektrischen Maschine dienenden Bürste (17), die relativ zum Gehäuse (5) innerhalb diesem beweglich geführt und mittels einer Feder (16) belastet ist, mit wenigstens einer der Stromversorgung der wenigstens einen Bürste (17) dienenden elektrischen Anschlußschiene (53),die sich durch eine aus Isolierstoff bestehende und dabei benachbart zur Gehäusestirnwand (9) angebrachte Platte (50) und einen Durchbruch (52) in der Gehäusestirnwand (9) erstreckt, wobei die Platte (50) auf einer Seite einen Sokkel (51) zur Aufnahme wenigstens einer Sicherungsfahne (54) der elektrischen Anschlußschiene (53) und auf einer zweiten, gegen die Gehäusestirnwand (9) gerichteten Seite einen rohrartigen, die elektrische Anschlußschiene (53) aufnehmenden Tragkörper (32) aufweist zum Einstecken der elektrischen Anschlußschiene (53) und Hindurchstecken eines freien Endes (29) der Anschlußschiene, das einen Steckkontakt bildet, durch den rohrartigen Tragkörper (32) und wobei diese elektrische Anschlußschiene (53) wenigstens mittelbar mit dem Gehäuse (5) elektrisch verbunden ist, **dadurch gekennzeichnet, daß** vom Sockel (51) ausgehend und dabei von einem Bereich zur Aufnahme einer Sicherungsfahne (54) ein zur Gehäusestirnwand (9) offener Durchbruch (52) ausgeht, daß dieser Durchbruch (52) neben dem rohrartigen Tragkörper (32) angeordnet ist, und daß die Sicherungsfahne (54) in Richtung zur Gehäusestirnwand (9) und dabei den Durchbruch (52) durchziehend weitergebildet ist mit einer gegen die Gehäusestirnseite (9) gerichteten Begrenzungsfläche (56), die eine Kontaktfläche bildet zur Kontaktierung mit der Gehäusestirnseite (9) und mittelbar über diese mit dem in elektrisch leitendem Kontakt befindlichen Gehäuse (5).

2. Elektrische Maschine nach Anspruch 1, **dadurch gekennzeichnet, daß** die Begrenzungsfläche (56) sich an einem nasenartigen Fortsatz (55) an der Sicherungsfahne (54) der elektrischen Anschlußschiene (53) befindet und zur Gehäusestirnwand (9) hin gerichtet ist.

3. Elektrische Maschine nach Anspruch 1 oder 2, **dadurch gekennzeichnet, daß** eine gekrümmte Blattfeder (58) zwischen die Sicherungsfahne (54) bzw. deren Begrenzungsfläche (56) und die Gehäusestirnwand (9) eingespannt ist, wobei ein Krümmungsscheitel (61) gegen die Begrenzungsfläche (56) und zwei Blattfederenden (59, 60) gegen die Gehäusestirnwand (9) gerichtet angelegt sind.

4. Elektrische Maschine nach Anspruch 3, **dadurch gekennzeichnet, daß** eine zweite Blattfeder (63) parallel zur ersten Blattfeder (58) in einem Abstand angeordnet ist und Blattfederenden (59, 60, 64, 65) beider Blattfedern (58, 63) über einstückig mit den Blattfedern (58, 63) hergestellten Schenkeln (67, 68) verbunden sind und daß zwischen den Blattfedern (58, 63) eine Öffnung (71) umgrenzt ist, innerhalb der ein Querschnitt des rohrartigen Tragkörpers (32) mit radialem Abstand Platz findet.

5. Elektrische Maschine nach Anspruch 4, **dadurch gekennzeichnet, daß** die beiden Schenkel (67, 68) im wesentlichen parallel zueinander und dabei im wesentlichen rechtwinkelig zu den Blattfedern (58, 63) ausgerichtet sind und beide Schenkel (67, 68) in Ausnehmungen der isolierenden Platte (50) einsteckbar sind.

6. Elektrische Maschine nach Anspruch 5, **dadurch gekennzeichnet, daß** beide Schenkel (67, 68) mit in Form von Ausbiegungen gestalteten Widerhaken (72, 73) versehen sind, die in der isolierenden Platte (50) vorgesehenen Rastausnehmungen (74, 75) einrasten.

7. Elektrische Maschine nach Anspruch 5, **dadurch gekennzeichnet, daß** Biegungskrümmungen (67, 68) relativ zu den beiden Blattfedern (58, 63) im gleichen Krümmungssinn verlaufend ausgebildet sind.

8. Elektrische Maschine nach einem der Ansprüche 3 bis 7, **dadurch gekennzeichnet, daß** benachbart zur Gehäusestirnwand (9) die isolierende Platte (50) um den rohrartigen Tragkörper (32) herum eine die Blattfedern (58, 63) mit Spiel aufnehmende Vertiefung (62) aufweist mit einer Tiefe, die größer ist als ein toleranzabhängig kleinster Abstand zwischen der kontaktgebenden Begrenzungsfläche (56) der elektrischen Anschlußschiene (53) und einer zugeordneten Oberfläche der Gehäusestirnwand (9).

## Claims

1. Electrical machine having a housing (5), which is produced electrically conductively from metal, having a housing front wall (9), which is produced electrically conductively from metal, having at least one brush (17), which is used for operating the electrical machine, is passed movably in relation to the housing (5) within said housing and is loaded by means of a spring (16), having at least one electrical connection rail (53), which is used for supplying current to the at least one brush (17) and extends through a plate (50), which consists of insulating material and in this case is fitted adjacent to the housing front wall (9), and an aperture (52) in the housing front wall (9), the plate (50) having a socket (51) on one side for accommodating at least one securing lug (54) of the electrical connection rail (53) and a tubular supporting body (32), which accommodates the electrical connection rail (53), on a second side pointing towards the housing front wall (9), for the purpose of inserting the electrical connection rail (53) and pushing a free end (29) of the connection rail, which free end forms a plug-in contact, through the tubular supporting body (32), and this electrical connection rail (53) being electrically connected, at least indirectly, to the housing (5), **characterized in that** an aperture (52), which is open towards the housing front wall (9), originates from the socket (51) and in the process from a region for accommodating a securing lug (54), **in that** this aperture (52) is arranged adjacent to the tubular supporting body (32), and **in that** the securing lug (54) is extended in the direction towards the housing front wall (9) and in the process so as to pass through the aperture (52), with a limiting face (56), which points towards the housing front side (9) and forms a contact face for making contact with the housing front side (9) and, indirectly via said housing front side (9), with the housing (5), which is in electrically conductive contact.

2. Electrical machine according to Claim 1, **characterized in that** the limiting face (56) is located on a tab-like protrusion (55) on the securing lug (54) of the electrical connection rail (53) and points towards the housing front wall (9).

3. Electrical machine according to Claim 1 or 2, **characterized in that** a curved leaf spring (58) is clamped in between the securing lug (54) or its limiting face (56) and the housing front wall (9), a curvature apex (61) being positioned such that it points towards the limiting face (56), and two leaf spring ends (59, 60) being positioned such that they point towards the housing front wall (9).

4. Electrical machine according to Claim 3, **characterized in that** a second leaf spring (63) is arranged parallel to the first leaf spring (58) at a distance, and leaf spring ends (59, 60, 64, 65) of the two leaf springs (58, 63) are connected via limbs (67, 68), which are produced integrally with the leaf springs (58, 63), and **in that** an opening (71) is circumscribed between the leaf springs (58, 63), within which opening (71) a cross section of the tubular supporting body (32) finds space at a radial distance.

5. Electrical machine according to Claim 4, **characterized in that** the two limbs (67, 68) are aligned essentially parallel to one another and in the process essentially at right angles to the leaf springs (58, 63), and the two limbs (67, 68) can be plugged into cutouts in the insulating plate (50).

6. Electrical machine according to Claim 5, **characterized in that** the two limbs (67, 68) are provided with barbs (72, 73), which are in the form of bent-out portions and latch into latching cutouts (74, 75) provided in the insulating plate (50).

7. Electrical machine according to Claim 5, **characterized in that** bending curvatures (67, 68) are formed so as to run in the same sense of curvature in relation to the two leaf springs (58, 63).

8. Electrical machine according to one of Claims 3 to 7, **characterized in that**, adjacent to the housing front wall (9), the insulating plate (50) has, around the tubular supporting body (32), a depression (62) accommodating the leaf springs (58, 63) with play and having a depth which is greater than a very small (depending on tolerances) distance between the contact-making limiting face (56) of the electrical connection rail (53) and an associated surface of the housing front wall (9).

## Revendications

1. Machine électrique comportant un boîtier (5) en métal électro-conducteur, ayant une paroi frontale (9) réalisée en métal électro-conducteur, au moins un balai (17) servant au fonctionnement de la machine électrique, ce balai étant guidé dans le boîtier (7) de manière mobile par rapport à celui-ci en étant sollicité par un ressort (16),
au moins un rail de raccordement électrique (53) du balai (17) d'alimentation électrique, ce rail traversant une plaque (50) en matière isolante installée au voisinage de la paroi frontale (9) du boîtier ainsi qu'un passage (52) de la paroi frontale (9) du boîtier,
la plaque (50) ayant d'un côté un socle (51) pour recevoir au moins une patte de fixation (54) du rail de raccordement électrique (53) et sur un second côté tourné vers la paroi frontale (9) du boîtier, un support tubulaire (32) recevant le rail de branchement électrique (53), pour enficher le rail de branchement électrique (53) et faire passer son extrémité libre (29) constituant une fiche de contact, à travers le support tubulaire (32) et ce rail de branchement électrique (53) étant relié électriquement au moins indirectement avec le boîtier (5),
**caractérisée en ce que**
partant du socle (51) et ainsi d'une zone recevant la patte de fixation (54), un passage (52) ouvert vers la paroi frontale (9) du boîtier est prévu à côté du support tubulaire (32), et
la patte de fixation (54) se poursuit en direction de la paroi frontale (9) du boîtier et dans le passage (52) en ayant une surface limite (56) dirigée vers la paroi frontale (9) du boîtier, cette surface limite formant une surface de contact pour établir le contact avec la paroi frontale (9) du boîtier et indirectement par l'intermédiaire de celle-ci avec le boîtier (5) qui est en contact électrique.

2. Machine électrique selon la revendication 1,
**caractérisée en ce que**
la surface limite (56) est prévue sur un prolongement (55) en forme de bec de la patte de fixation (54) du rail de branchement électrique (53) en étant dirigée vers la paroi frontale (9) du boîtier.

3. Machine électrique selon la revendication 1 ou 2,
**caractérisée par**
un ressort-lame cintré (58) est tendu entre la patte de fixation (54) ou sa surface limite (56) et la paroi frontale (9) du boîtier, le sommet (61) de la courbure étant dirigé contre la surface limite (56) et deux extrémités de ressort-lame (59, 60) sont appliquées en étant dirigées contre la paroi frontale (9) du boîtier.

4. Machine électrique selon la revendication 3,
**caractérisée en ce qu'**
un second ressort-lame (63) parallèle au premier ressort-lame (58) est écarté de celui-ci et les extrémités des ressorts-lames (59, 60, 64, 65) des deux ressorts-lames (58, 63) sont reliées par des branches (67, 68) réalisées en une seule pièce avec les ressorts-lames (58, 63), et
entre les ressorts-lames (58, 63) on a délimité une ouverture (71) logeant une section du support tubulaire (32) avec un écartement radial.

5. Machine électrique selon la revendication 4,
**caractérisée en ce que**
les deux branches (67, 68) sont essentiellement parallèles et ainsi alignées pratiquement à angle droit par rapport aux ressorts-lames (58, 63), et les deux branches (67, 68) s'engagent dans des cavités de la plaque isolante (50).

6. Machine électrique selon la revendication 5,
**caractérisée en ce que**
les deux branches (67, 68) comportent des crochets de retenue (72, 73) en forme de parties recourbées, qui s'accrochent dans des cavités d'encliquetage (74, 75) de la plaque isolante (50).

7. Machine électrique selon la revendication 5,
**caractérisé en ce que**
les courbures de cintrage des branches (67, 68) sont dirigées dans le même sens de courbure par rapport aux deux ressorts-lames (58, 63).

8. Machine électrique selon l'une des revendications 3 à 7,
**caractérisée en ce qu'**
au voisinage de la paroi frontale (9) du boîtier, la plaque isolante (50) comporte une cavité (62) recevant le support tubulaire (32) avec du jeu autour de l'un des ressorts-lames (58, 63), cette cavité ayant une profondeur supérieure à la plus petite distance en fonction des tolérances entre la surface limite (56) assurant le contact du rail de branchement électrique (53) et une surface correspondante de la paroi frontale (9) du boîtier.
